# EUROPÄISCHE PATENTANMELDUNG

(11) **EP 1 584 667 A1**
(43) Veröffentlichungstag der Anmeldung: **12.10.2005**
(21) Anmeldenummer: 04008562.3
(22) Anmeldetag: 08.04.2004
(51) Int. Cl.: C09D 167/00, C09D 161/06, C08L 67/00, C08L 61/06

(54) **Phenolharze enthaltende Mischungen für Innenschutzlacke**

(71) Anmelder: Surface Specialties Austria GmbH, 8402 Werndorf (AT)
(72) Erfinder: URBANO, Edmund Dr., 8044 Graz (AT); WIXMERTEN, Bodo Dr., 64572 Büttelborn (DE); OBERRESSL, Paul, 65187 Wiesbasen (DE); BRINDÖPKE, Gerhard Dr., 65934 Frankfurt (DE); ETZ, Oliver, 65510 Hünstetten (DE)
(74) Vertreter: Deckers, Hellmuth Alexander

(57) **Zusammenfassung**

Mischungen enthaltend Phenolharze **B** und verzweigte hochmolekulare gesättigte Polyester **A** mit freien Carboxylgruppen und ihre Verwendung als Beschichtungsmittel zur Innenbeschichtung von Lebensinittelbehältern

## Beschreibung

Die Erfindung betrifft Phenolharze enthaltende Mischungen für Innenschutzlacke.

Bisher werden für die Innenlackierung von Blechemballagen, die mit Lebensmitteln befüllt werden, nahezu ausschließlich Kombinationen aus Phenolharzen und Epoxidharzen verwendet. Die in diesem Bereich eingesetzten Epoxidharze basieren auf 2,2-Bis-(4-hydroxyphenyl)-propan-bis-(2,3-epoxypropyl)-äther (Trivialname: Bisphenol A- diglycidyläther, abgekürzt "BADGE").

BADGE steht im Verdacht, die Gesundheit zu schädigen. Vor diesem Hintergrund wurde in der EU-Direktive 2002/16/EC festgeschrieben, daß der Einsatz oder die Gegenwart von BADGE bei der Herstellung von Materialien, die für den Lebensmittelkontakt gedacht sind, nach dem 31.12.2004 verboten wird.

Lackierungen, die ausschließlich auf Phenolharzen basieren, weisen nicht die erforderliche Kombination von Haftung auf metallischen Substraten, Elastizität gegenüber Verformung und Stabilität gegenüber den Inhaltsstoffen der zu verpackenden Lebensmittel auf.

Es besteht daher die Aufgabe, für die Innenlackierung von Behältern, die mit Lebensmitteln in Kontakt kommen, einen Lack enthaltend eine Phenolharz-Formulierung zur Verfügung zu stellen, bei deren Herstellung keine BADGE-haltigen Stoffe oder durch Umsetzung von BADGE mit weiteren Substanzen hergestellten Stoffe benutzt werden.

Die Aufgabe wird gelöst durch Phenolharze **B** enthaltende Mischungen, die als weiteren Mischungsbestandteil hochmolekulare gesättigte Polyester **A** mit freien Carboxylgruppen enthalten, wobei mindestens 50 % der freien Carboxylgruppen in der Polymerkette (also nicht am Kettenende) gebunden sind. Dies wird bevorzugt dadurch ermöglicht, daß zur Synthese des Polyesters solche mehrwertigen Säuren **AA** eingesetzt werden, die Säuregruppen unterschiedlicher Reaktivität gegenüber der Veresterung besitzen, wobei mindestens zwei Säuregruppen dieser Säuren **AA** mit Polyolen **AB** unter Polykondensation reagieren und mindestens eine dritte Säuregruppe in dieser Kondensationsreaktion gar nicht umgesetzt wird oder mit einer Geschwindigkeitskonstante reagiert, die höchstens gleich einem Zehntel der Geschwindigkeitskonstanten bezüglich der Veresterung der anderen Säuregruppen in der Säure **AA** ist. Eine andere bevorzugte Möglichkeit ist die Cokondensation einer hydroxyfunktionellen Verbindung, die entweder zwei Hydroxylgruppen mit ähnlicher Reaktivität in der Polykondensation aufweist und eine Carboxylgruppe, die unter den Kondensationbedingungen nicht oder nur sehr langsam reagiert; eine dritte bevorzugte Möglichkeit ist die Verwendung einer Hydroxydicarbonsäure mit einer reaktiven und einer wenig reaktiven Carboxylgruppe.

Als "hochmolekulare" Polyester werden hier solche bezeichnet, deren Viskosität in einer 60 % igen Lösung in Butylglykol bei 23 °C und 25 s⁻¹ gemessen nach DIN-EN ISO 3219 mindestens 500 mPa·s, bevorzugt mindestens 600 mPa·s beträgt.

Dabei verhält sich die Masse m(**A**) der Polyester **A** zur Masse m(**B**) der Phenolharze **B** wie (50 bis 90) : (50 bis 10), vorzugsweise (60 bis 80) : (40 bis 20).

Bevorzugt haben die erfindungsgemäßen Polyester **A** eine Säurezahl von 15 mg/g bis 200 mg/g, besonders bevorzugt 25 mg/g bis 150 mg/g und insbesondere 35 mg/g bis 100 mg/g. Ihre Hydroxylzahl beträgt bevorzugt 20 mg/g bis 200 mg/g, besonders bevorzugt 30 mg/g bis 180 mg/g und insbesondere 40 mg/g bis 150 mg/g. In einer weiteren bevorzugten Ausführungsform sind mindestens 50 % der freien Carboxylgruppen so mit der Hauptkette verbunden, daß die verbindende Struktur keine hydrolysierbaren Gruppen enthält. Als "hydrolysierbare Gruppen" im Sinne dieser Erfindung werden solche Gruppen bezeichnet, die durch Einwirkung von Wasser und gegebenenfalls Katalysatoren gespalten werden, insbesondere Estergruppen, Amidgruppen und Carbonatgruppen.

Die Säurezahl ist gemäß DIN EN ISO 3682 definiert als der Quotient derjenigen Masse ***m***_{KOH} an Kaliumhydroxid, die erforderlich ist, um eine zu untersuchende Probe zu neutralisieren, und der Masse ***m***_{B} dieser Probe (Masse des Feststoffes in der Probe bei Lösungen oder Dispersionen); ihre übliche Einheit ist "mg/g".

Die Hydroxylzahl ist gemäß DIN EN ISO 4629 definiert als der Quotient derjenigen Masse ***m***_{KOH} an Kaliumhydroxid, die genausoviel Hydroxylgruppen aufweist wie eine zu untersuchende Probe, und der Masse ***m***_{B} dieser Probe (Masse des Feststoffes in der Probe bei Lösungen oder Dispersionen); ihre übliche Einheit ist "mg/g".

Die erfindungsgemäßen Mischungen heben sich von Phenolharz-Epoxidharz-Kombinationen dadurch ab, daß sie bei ungefähr gleichen anwendungstechnischen Eigenschaften absolut frei von BADGE sind. Im Vergleich zu Epoxidharz-Melaminharz-Systemen zeichnen sie sich durch eine weitaus höhere Beständigkeit gegen im Lebensmittelbereich eingesetzte Füllgüter auch während der häufig notwendigen Sterilisation aus.

Die Polyester **A** sind erhältlich durch Polykondensation von tri- oder mehrfunktionellen aliphatischen Säuren **AA,** difunktionellen aliphatischen, cycloaliphatischen oder aromatischen Carbonsäuren **AB**, aliphatischen Monocarbonsäuren **AC** und aliphatischen linearen, verzweigten oder cyclischen Polyolen **AD** in bekannter Weise gegebenenfalls in Gegenwart von Veresterungskatalysatoren. Anstelle der genannten Säuren und/oder Alkohole lassen sich auch deren reaktive Derivate, wie zum Beispiel Säureanhydride oder Ester mit leichtflüchtigen Alkoholen oder Ester der Alkohole mit leichtflüchtigen Säuren einsetzen.

Die Polyester **A** enthalten pro Molekül im Durchschnitt mindestens eine, bevorzugt mindestens zwei, und insbesondere mindestens drei Verzweigungsstellen.

Geeignete Verbindungen **AA** sind Verbindungen mit mindestens einer Säuregruppe und mindestens zwei weiteren funktionellen Gruppen, wobei mindestens eine Säuregruppe unter den Polykondensationsbedingungen weniger reaktiv ist als die anderen funktionellen Gruppen, so daß nach der Kondensation eine unreagierte Säuregruppe verbleibt. Geeignet sind besonders im Fall, daß sämtliche funktionellen Gruppen Säuregruppen sind, Carbonsäuren mit drei oder mehr Carboxylgruppen wie Citronensäure, Aconitsäure und Tricarballylsäure. Unter den Tricarbonsäuren ist besonders die Citronensäure geeignet; es sind auch Verbindungen geeignet, die unter den drei oder mehr funktionellen Gruppen zwei Hydroxylgruppen und eine Carboxylgruppe aufweisen, wobei die Carboxylgruppe unter den Kondensationsbedingungen im wesentlichen unreagiert bleibt. Beispiele solcher Verbindungen sind Dimethylolpropionsäure und Dimethylolessigsäure. Ebenso geeignet sind Verbindungen mit zwei Carboxyl- und einer Hydroxylgruppe, wobei unter den Polykondensationsbedingungen die Hydroxylgruppe und nur eine der Carboxylgruppen reagiert. Durch den Einsatz dieser speziellen Verbindungen **AA** ist es möglich, die freien, also unveresterten Carboxylgruppen direkt, also insbesondere ohne eine hydrolysierbare Esterbrücke an die Polymerhauptkette zu binden. Es hat sich bei den Untersuchungen, die der vorliegenden Erfindung zugrundelagen, gezeigt, daß dadurch die Stabilität der erfindungsgemäß hergestellten Beschichtungen vor allem in Kontakt mit sauren Füllgütern verbessert wird.

Geeignete Verbindungen **AB** sind die linearen oder verzweigten aliphatischen Dicarbonsäuren mit 2 bis 40 Kohlenstoffatomen, bevorzugt 4 bis 36 Kohlenstoffatomen. Bevorzugt werden gesättigte Verbindungen wie Bernsteinsäure, Glutarsäure, Adipinsäure, und die durch Dimerisierung von ungesättigten Fettsäuren zugänglichen (Mischungen von) gesättigten gegebenenfalls verzweigten Dicarbonsäuren. Unter den cycloaliphatischen Dicarbonsäuren werden Hexahydrophthalsäure und 1,4-Cyclohexandicarbonsäure bevorzugt. Als aromatische Dicarbonsäuren kommen insbesondere Iso- und Terephthalsäure sowie 1,4- und 2,6-Naphthalindicarbonsäure in Betracht.

Geeignete aliphatische Monocarbonsäuren **AC** sind lineare oder verzweigte Verbindungen mit 6 bis 16, insbesondere 8 bis 14 Kohlenstoffatomen, wie zum Beispiel2-Äthylhexansäure und Caprinsäure.

Die aliphatischen Polyole **AD** haben im Mittel 1,8 bis 3, bevorzugt 2 bis 2,5 Hydroxylgruppen je Molekül. Bevorzugt werden Mischungen von Dihydroxyverbindungen mit Hydroxyverbindungen mit drei oder mehr Hydroxylgruppen. Dabei haben die Dihydroxyverbindungen bevorzugt 2 bis 10, insbesondere 2 bis 9 Kohlenstoffatomen wie Glykol, 1,2- und 1,3-Propandiol, 1,4-Butandiol, und 1,6-Hexandiol. Es lassen sich auch verzweigte Verbindungen wie Neopentylglykol und die isomeren Trimethylpentan- und -hexandiole einsetzen. Als Trihydroxyverbindungen mit 3 bis 10 Kohlenstoffatomen sind insbesondere Glycerin, Trimethylolpropan und Trimethyloläthan geeignet. Geeignete höherfunktionelle Alkohole sind Erythrit, Pentaerythrit, Ditrimethylolpropan und -äthan, Diglycerin sowie die Zuckeralkohole wie Sorbit, Mannit und Xylit.

Geeignete Phenolharze **B** sind insbesondere Resole, unter diesen bevorzugt zumindest teilweise verätherte Resole, die durch Reaktion von Phenolen oder Mischungen von mehreren Phenolen mit mindestens einem an den aromatischen Kern in ortho- oder para-Stellung gebundenen Wasserstoffatom und Aldehyden, insbesondere Formaldehyd in bekannter Weise unter alkalischer Katalyse gebildet werden, und die anschließend im sauren Milieu mit linearen oder verzweigten aliphatischen Alkoholen mit 1 bis 6 Kohlenstoffatomen, insbesondere Methanol sowie n- und iso-Butanol veräthert werden. Besonders bevorzugt sind mit n- oder iso-Butanol verätherte Resole, die mindestens einen Massenanteil an 20 % von Kresolen enthalten.

Unter "teilweise verätherten Resolen" werden solche Resole verstanden, deren Hydroxymethylgruppen zumindest zu 20 % mit den genannten aliphatischen Alkoholen veräthert sind.

Die Polyester **A** werden mit den Phenolharzen **B** und gegebenenfalls üblichen Additiven wie Verlaufsmittel, Vernetzungskatalysatoren und Lösungsmitteln zu Beschichtungsmitteln formuliert.

Die so formulierten Beschichtungsmittel werden bevorzugt zur Lackierung von Metallen, insbesondere zur Innenlackierung von Behältern aus Metall eingesetzt, besonders bevorzugt für Lebensmittelbehälter; nach Einbrennen bei 160 °C bis 230 °C ergeben sich goldfarbene Filme, die eine ausgezeichnete Haftung auf dem metallischen Untergrund auch bei mechanischer Beanspruchung und eine gute Beständigkeit gegen alle üblichen Füllgüter aufweisen.

Die Erfindung wird durch die nachfolgenden Beispiele erläutert.

In den nachfolgenden Beispielen bedeuten ebenso wie im vorhergehenden Text alle Angaben mit der Einheit "%" Massenanteile (Quotient der Masse des betreffenden Stoffes und der Masse der Mischung), soweit nicht anders angegeben. Konzentrationsangaben in "%" sind Massenanteile des gelösten Stoffes in der Lösung (Masse des gelösten Stoffes, dividiert durch die Masse der Lösung).

### Beispiele

### Beispiel 1 Herstellung der durch mehrfunktionelle Säuren verzweigten Polyester

Gemäß den Angaben in der Tabelle 1 wurden Polyester durch Mischen der angegebenen Rohstoffe (Massen in g) und Erhitzen auf eine Guttemperatur von 220 °C unter Entfernung des Reaktionswassers durch azeotrope Destillation mit Xylol hergestellt. Die Reaktion wurde solange geführt, bis die Säurezahl in der Reaktionsmischung konstant blieb. Anschließend wurde die Reaktionsmischung auf 140 °C gekühlt und in Methoxypropylacetat aufgenommen. Der Festkörper-Massenanteil der Lösung betrug ca. 60 %.

**Tabelle 1:**

| Zusammensetzung (Massen der Edukte in g) und Eigenschaften der Polyester | | | | |
|---|---|---|---|---|
| Beispiel | 1.1 | 1.2 | 1.3 | 1.4 |
| Rohstoff | | | | |
| Citronensäure | 8,7 | 16 | 21,7 | 16,2 |
| Trimethylolpropan | 24.4 | 22,4 | 30,3 | 22,6 |
| Butylenglykol | 20,5 | 18,8 | 10,2 | 20 |
| Caprinsäure | 7,1 | 13,1 | 17,7 | 13,3 |
| Cyclohexandicarbonsäure | 54,7 | 43,1 | 32,4 | 0 |
| Phthalsäureanhydrid | 0 | 0 | 0 | 36,7 |
| Reaktionswasser (entfernt) | 15,4 | 13,4 | 12,3 | 8,8 |
| Methoxypropylacetat | 66,7 | 66,7 | 66,7 | 66,7 |
| Festharz | 100 | 100 | 100 | 100 |
| Säurezahl in mg/g | 32 | 65 | 84 | 65 |
| Hydroxylzahl in mg/g | 125 | 100 | 120 | 110 |
| Viskosität bei 23 °C in mPa·s | 3600 | 2700 | 4150 | 3300 |

Die Viskosität wurde jeweils in Xylol an einer Lösung von 70 g des Polyesters in 10 g der Lösung bestimmt.

### Vergleichsbeispiele für PS Polyester-Phenolharz-Kombinationen

### Vergleichsbeispiel 1 (durch einen mehrfunktionellen Alkohol verzweigter Polyester)

36,7 g Neopentylglykol, 15,6 g Trimethylolpropan, 23,5 g Adipinsäure und 35,3 g Phthalsäureanhydrid wurden auf 220 °C erhitzt und unter azeotroper Destillation mit Xylol als Schleppmittel bis zu einer Säurezahl von unter 10 mg/g verestert. Das Produkt wurde dann auf 140 °C abgekühlt und in Xylol gelöst, es wurde eine Konzentration (Festkörper-Massenanteil) von 70 % eingestellt. Die Viskosität in Xylol bei der Konzentration von 70 % (70 cg/g) betrug 2950 mPa·s.

### Vergleichsbeispiel 2 (linearer Polyester)

25,2 g Neopentylglykol, 24,8 g 1,6-Hexandiol, 43,2 g Terephthalsäure und 20,3 g Isophthalsäure wurden aufgeschmolzen und nach der Zugabe von 0,1 g Dibutylzinnoxid unter guter Durchmischung auf 240 °C erhitzt und durch Schmelzkondensation bis zu einer Säurezahl von unter 10 mg/g verestert. Die Reaktionsmasse wurde dann auf 180 °C gekühlt und mit Solventnaphtha (Aromatengemisch mit Siedebereich 180 bis 210°C) angelöst. An einer Probe wurde ein Staudinger-Index von 18,5 cm³/g bestimmt. Die Konzentration (Festkörper-Massenanteil) wurde auf 50 % eingestellt. Die Viskosität bei einer Konzentration von 50 % betrug 2550 mPa·s.

### Beispiel 2 Herstellung eines verätherten Resols auf der Basis von o-Kresol

108 g o-Kresol wurden zusammen mit 18,18 g Natronlauge (33 %ige wäßrige Lösung) sowie 138 g einer 37 %-igen wäßrigen Formaldehydlösung auf 80 °C erhitzt und solange bei dieser Temperatur gehalten, bis die Formaldehydkonzentration auf weniger als 2 % gesunken war. Danach wurden 29,4 g Schwefelsäure (25 %ige wäßrige Lösung) zur Einstellung eines pH-Wertes von 5 bis 6 hinzugegeben. Nach der pH-Einstellung ließ man die Unterlauge bei 80 °C absetzen. Nach anschließend das Waschwasser wieder abgetrennt. Nach Beendigung des Waschvorgangs wurden dem Ansatz 120 g n-Butanol zugegeben, es wurde während 15 h an einem Wasserabscheider destilliert.

Nach Einstellung des Festkörper-Massenanteils (Bestimnungsmethode analog DIN EN 3251) der Harzlösung mit Butanol auf 80 % wurde der Ansatz mittels einer Filtration von abgeschiedenen Feststoffen (Salzen) befreit.

Die erhaltene 80 %ige Harzlösung in n-Butanol ist ein mit Butanol veräthertes o-Kresol-Resol.

### Beispiel 3 Lackvergleich

Es wurden Mischungen hergestellt aus dem Phenolharz des Beispiels 2 und dem Polyester des Beispiels 1.1 (Lack 1). Zum Vergleich wurden Mischungen desselben Phenolharzes mit einem linearen Polyester (Vergleichsbeispiel 2, Lack 2) und Epoxidharzen des Typs 7 (Lack 3) und 9 (Lack 4) hergestellt und durch Zugabe von Lösungsmittel auf dieselbe Applikationsviskosität eingestellt. Dabei waren in den Mischungen Lack 1 bis Lack 4 die Massenverhältnisse von Phenolharz zu Zumischharz (Polyester- bzw. Epoxid-Harz) jeweils konstant. Mit diesen Lacken wurde für die Dosenherstellung übliches Weißblech beschichtet, der Lackfilm wurde bei 200 °C während 12 Minuten eingebrannt. Der gehärtete Lackfilm (Trockenfilmdicke ca. 5 µm) war in allen Fällen goldgelb.

**Tabelle 4**

| Lackformulierungen (Masse der Feststoffe in g) und Ergebnisse | | | | |
|---|---|---|---|---|
| | Lack 1 | Lack 2 | Lack 3 | Lack 4 |
| Phenolharz | 15,4 | 15,20 | 11,74 | 10,52 |
| Zumischharz | 35,0 | 34,55 | 27,32 | 24,48 |
| Lösungsmittel ¹ | 49,6 | 50,25 | 60,94 | 65,00 |
| Festkörper-Massenanteil | 50% | 50% | 39 % | 35% |
| "wedge bend test" ² | 75% | 50% | 65 % | 75% |
| Sterilisation, Deckfläche ³ | i. O. | 1. A. | 1. A. | 1. A. |
| Sterilisation, Flanke ³ | 1. R. | Risse | 1. R. | L. R. |
| Sterilisation, Deckfläche ⁴ | i. O. | 1. A. | 1. A. | 1. A. |
| Sterilisation, Flanke ⁴ | 1. R. | Risse | 1. R. | 1. R. |
| Sterilisation, Gitterschnitt ⁵ | 0 | 0 | 0 | 0 |
| Sterilisation, Oberfläche ⁵ | i. O. | Anlaufen | 1. A. | 1. A. |
| Schwefel-Flecken-Test ⁶ | 2 | 5 | 3 bis 4 | 3 |
| Erläuterung der Abkürzungen: 1. A. Leichtes Anlaufen 1. R. Leichte Rauhigkeit i. O. In Ordnung | | | | |

| | | | | |
|---|---|---|---|---|
| 1 Lösungsmittelgemisch Butanol/Methoxypropanol, jeweils eingestellt auf gleiche Applikationsviskosität | | | | |
| 2 Das beschichtete Blech wird über eine 90°-Kante gebogen und anschließend 5 Minuten einer Lösung von 132 g Kupfersulfat-Pentahydrat und 20 g conc. Salzsäure in 900 g destillierten Wasser ausgesetzt; es wird der Anteil der nicht korrodierten Biegekanten angegeben | | | | |
| 3 Sterilisationstest in 2 %iger wäßriger Milchsäurelösung bei 129 °C während einer Stunde, an Bechern mit 5 cm Durchmesser und 2,5 cm Höhe, Angabe des Aussehens der Deckfläche und der Flanken | | | | |
| 4 Sterilisationstest in 2 %iger wäßriger Milchsäurelösung bei 129 °C während einer Stunde, an Bechern mit 4 cm Durchmesser und 3,5 cm Höhe, Angabe des Aussehens der Deckfläche und der Flanken | | | | |
| 5 Sterilisationstest in 2 %iger wäßriger Milchsäurelösung bei 129 °C während einer Stunde an flachen Blechen, Ergebnisse bei Gitterschnitt und Aussehen der Oberfläche | | | | |
| 6 Schwefelfleckentest ("sulphur staining resistance"), Sterilisationstest in 0,05 %iger wäßriger Cystein-Lösung bei 121 °C während neunzig Minuten an flachen Blechen, Ergebnisse bei Gitterschnitt und Aussehen der Oberfläche Gitterschnitt: "0": keine Korrosion und Unterrostung, bis "5": starke Korrosion und Unterrostung | | | | |

Es ist zu erkennen, daß bei gleicher Applikationsviskosität gegenüber den Epoxidharz-Formulierungen mit den Polyestern ein erhöhter Festkörper-Massenanteil zu realisieren ist, die Ergebnisse im Sterilisationstest sind jedoch nur bei dem verzweigten Polyester verbessert. Selbstverständlich besteht ein wesentlicher Vorteil darin, daß aus den Lackschichten mit der erfindungsgemäßen Bindemittelinischung kein BADGE mehr extrahierbar ist. Gegenüber Formulierungen mit linearen Polyestern als Zumischharz ist überraschend, daß die Ergebnisse im "wedge bend test" und im Sterilisationstest erheblich verbessert sind. Bemerkenswert ist auch das schlechte Abschneiden der Formulierung mit dem linearen Polyester bei dem "Schwefel-Flecken-Test".

Bei der Erprobung des Einsatzes von linearen Polyestern anstelle der herkömmlicherweise verwendeten Epoxidharze als Zumischharze hätte der Fachmann daher die Gruppe der Polyester als ungeeignet verworfen. Es war überraschend und nicht vorhersehbar, daß sich bei Kombinationen von Phenolharzen mit den erfindungsgemäßen verzweigten, Säuregruppen enthaltenden Polyestern derart gute Ergebnisse zeigen, die denen der herkömmlichen Mischungen mit Epoxidharzen gleichwertig oder sogar überlegen sind (Sterilisationstest).

## Patentansprüche

1. Mischungen enthaltend Phenolharze **B** und verzweigte hochmolekulare gesättigte Polyester A mit freien Carboxylgruppen, wobei mindestens 50 % der freien Carboxylgruppen in der Polymerkette gebunden sind.

2. Mischungen nach Anspruch 1, **dadurch gekennzeichnet, daß** die Polyester **A** Bausteine abgeleitet von Polyolen **AB** und von solchen mehrwertigen Säuren **AA** enthalten, die Säuregruppen unterschiedlicher Reaktivität gegenüber der Veresterung besitzen, wobei mindestens zwei Säuregruppen dieser Säuren **AA** mit den Polyolen **AB** unter Polykondensation reagieren und mindestens eine dritte Säuregruppe in dieser Kondensationsreaktion mit einer Geschwindigkeitskonstante reagiert, die höchsten gleich einem Zehntel der Geschwindigkeitskonstanten bezüglich der Veresterung der anderen Säuregruppen in der Säure **AA** ist.

3. Mischungen nach Anspruch 1, **dadurch gekennzeichnet, daß** die Masse m(**A**) des Polyesters **A** zur Masse m(**B**) der Phenolharze **B** sich verhält wie (50 bis 90) : (50 bis 10).

4. Mischungen nach Anspruch 1, **dadurch gekennzeichnet, daß** die Polyester **A** eine Säurezahl von 15 mg/g bis 200 mg/g und eine Hydroxylzahl von 20 mg/g bis 200 mg/g aufweisen.

5. Mischungen nach Anspruch 1, **dadurch gekennzeichnet, daß** in den Polyestern **A** mindestens 50 % der freien Carboxylgruppen so mit der Hauptkette des Polyesters verbunden sind, daß die verbindende Struktur keine hydrolysierbaren Gruppen enthält.

6. Mischungen nach Anspruch 1, **dadurch gekennzeichnet, daß** die Polyester **A** Bausteine von Polyolen **AD** ausgewählt aus Trimethylolpropan und Pentaerythrit enthalten.

7. Mischungen nach Anspruch 1, **dadurch gekennzeichnet, daß** die Polyester **A** Bausteine abgeleitet von Citronensäure, Aconitsäure und/oder Tricarballylsäure enthalten.

8. Verwendung der Mischungen nach Anspruch 1 zum Beschichten von Metallen.

9. Verwendung nach Anspruch 8 für Innenbeschichtungen von Lebensmittelbehältern.
